# EUROPEAN PATENT APPLICATION

(11) **EP 2 521 220 A1**
(43) Date of publication of application: **07.11.2012**
(21) Application number: 10840387.4
(22) Date of filing: 24.06.2010
(51) Int. Cl.: H01Q 3/02

(54) **OPERATION MAINTENANCE SYSTEM, CONTROLLER AND RADIO FREQUENCY SUBSYSTEM FOR MANAGING ELECTRON REGULATION ANTENNAS**

(30) Priority: 31.12.2009 CN 200910261866
(71) Applicant: ZTE Corporation, Shenzhen, Guangdong 518057 (CN)
(72) Inventor: YI, Song, Guangdong 518057 (CN)
(74) Representative: Modiano, Micaela Nadia
(86) International application number: PCT/CN2010/074404
(87) International publication number: WO 2011/079598

(57) **Abstract**

The present invention discloses an operation maintenance system for managing an electrically regulated antenna, which system comprises: a driver for executing a control command to an electrically regulated antenna and reporting an operation result and/or a failure reason code of the execution of the control command; an operation maintenance center server including: an interface module, adapted for receiving an operation instruction from an input device and/or a report from a driver and for sending the control command, and a control module, adapted for issuing the control command according to the operation instruction and/or the report; and a radio frequency subsystem including: an agent module, adapted for forwarding the control command to the driver and forwarding the report to the control module, and a link module, adapted for establishing an active link between the driver and the agent module. The present invention further provides a control module and a radio frequency subsystem for managing an electrically regulated antenna. The present invention solves the problem of relatively low operation efficiency and rather high costs due to the need for maintenance personnel to manage the electrically regulated antennae on site, thus achieving the effect of allowing the maintenance personnel to manage electrically regulated antennae remotely, improving efficiency and reducing costs.

## Description

### Field of the Invention

The present invention relates to the communication fields, and in particular to an operation maintenance system, a controller and a radio frequency subsystem for managing electrically regulated antennae.

### Background of the Invention

The rapid development of mobile communication technology continuously pushes the advance of antenna technology. Electrically regulated antenna equipment has already been widely applied in the field of communication. Electrically regulated antenna is a radio frequency transmitting/receiving device corresponding to the mechanical antenna and can regulate the antenna down tilt by way of electric control. Its principle is to achieve the object of adjusting the down tilt of the antenna vertical directional pattern by changing the phase of antenna poles in the collinear array, changing the amplitudes of vertical component and horizontal component, and changing the strength of composed component field. As compared to the mechanical antenna, the electrically regulated antenna has the advantages of easy adjustment and high adjustment accuracy. Since direct mechanical operation by engineering personnel is not required, the down tilt of the antenna also can be adjusted when the antenna is in the operating state. Accordingly, using electrically regulated antennae can also significantly reduce the operation maintenance costs and improve work efficiency.

Currently, the methods for controlling electrically regulated antennae are basically divided into two categories:
(1) A controller is installed on an antenna and directly connected to the driver of the antenna. In this mode, the inventors find that before adjusting the antenna, the maintenance personnel has to go to the site, and the adjustment can only be performed after the maintenance personnel climbs up the tower to connect a third-party controller during the operation. Such an operation manner has some risk and the costs of material and manpower are rather high, and the operation process would become more complicated if it requires multiple adjustments.
(2) The controller is taken as a module of the base station subsystem, and the electrically regulated antenna under a BTS (base transceiver station) is operated by using the manner of LMT (local maintenance terminal). The inventors find that this manner still requires maintenance personnel to go to the equipment room where the BTS is located before he can adjust the antenna, and each adjustment can only be performed to the antennae under one BTS. If it is necessary to operate all the BTSs under one BSC (base station controller), the maintenance personnel needs to rush to many places to perform adjustment, which will seriously affect the operation efficiency and introduce additional costs at the same time.

### Summary of the Invention

The main object of the present invention is to provide an operation maintenance system, a controller and a radio frequency subsystem for managing electrically regulated antennae so as to solve the above problems of relatively low operation efficiency and rather high costs due to the need for maintenance personnel to manage the electrically regulated antennae on site.

An operation maintenance system for managing electrically regulated antennae is provided according to one aspect of the present invention, which system comprises: a driver for executing a control command to an electrically regulated antenna and reporting an operation result and/or a failure reason code of the execution of the control command; an operation maintenance center (abbreviated as OMC) server including: an interface module, adapted for receiving an operation instruction from an input device and/or a report from a driver and for sending the control command; a control module, adapted for issuing the control command according to the operation instruction and/or the report; a RFS (RF subsystem) including: an agent module, adapted for forwarding the control command to the driver and forwarding the report to the control module; and an link module, adapted for establishing an active link between the driver and the agent module.

Optionally, in the above operation maintenance system, the control command sent by the control module and the report of the driver comply with the Antenna Interface Standard Group (abbreviated as AISG) protocol.

Optionally, in the above operation maintenance system, the control module issues the control command by converting the format of the operation instruction into a format complying with the AISG protocol.

Optionally, in the above operation maintenance system, it further comprises: the agent module being further adapted for initiating a scan request towards the link module when the RFS is powered up; and the link module being further adapted for scanning the electrically regulated antennae to determine a currently operable electrically regulated antenna.

Optionally, in the above operation maintenance system, different tasks are identified by way of client ID + client task ID, and the link module or control module is adapted for filtering the tasks according to client ID + client task ID, so as to ensure that the operation instruction issues only one task to the same driver at the same time.

Optionally, the OMC server is an OMM (operation maintenance module) server, the input device is a client or command-line terminal for managing the OMM server, and the electrically regulated antennae belong to a BTS managed by the OMM server; or, the OMC server is a NMC (network management center) server, the input device is a client of the NMC server, and the electrically regulated antennae belong to a BTS of the whole network managed by the NMC server.

A controller for managing electrically regulated antennae is provided according to another aspect of the present invention, with the controller being set in an OMC server and comprising: an interface module, adapted for receiving an operation instruction from an input device and/or a report from a driver and for sending a control command for managing an electrically regulated antenna to the driver; and a control module, adapted for issuing the control command according to the operation instruction and/or the report; wherein the driver is set in the electrically regulated antenna, and is adapted for executing the control command to the electrically regulated antenna and reporting an operation result and/or a failure reason code of the execution of the control command.

Optionally, in the above controller, the control command issued by the controller and the report of the driver comply with the AISG protocol.

Optionally, in the above controller, the controller issues the control command by converting the format of the operation instruction into a format complying with the AISG protocol.

A RFS for managing electrically regulated antennae is provided according to another aspect of the present invention, which comprises: an agent module, adapted for forwarding a control command to a driver and forwarding a report to a controller; and a link module, adapted for establishing an active link between the driver and the agent module; wherein the driver being set in the electrically regulated antenna is adapted for executing the control command to the electrically regulated antenna and reporting an operation result and/or a failure reason code of the execution of the control command; and the controller being set in an OMC server is adapted for receiving an operation instruction from an input device and/or the report from the driver and issuing the control command according to the operation instruction and/or the report.

Optionally, in the above RFS, the agent module is further adapted for initiating a scan request towards the link module when the RFS is powered up or a message from the input device is received; and the link module is further adapted for scanning the electrically regulated antennae to determine a currently operable electrically regulated antenna and for feeding back the currently operable electrically regulated antenna to the operation maintenance center server.

Since the controller is set in the OMC server, the operation maintenance system, controller and radio frequency subsystem for managing electrically regulated antennae in the above embodiments of the present invention solve the above problem of relatively low operation efficiency and rather high costs due to the requirement for maintenance personnel to manage electrically regulated antennae on site. Thus it achieves the effect of allowing the maintenance personnel to manage the electrically regulated antennae remotely, and improves the work efficiency and reduces costs.

### Brief Description of the Drawings

The drawings illustrated here provide a further understanding of the present invention and form a part of the present application, and the embodiments and the description thereof are used to explain the present invention without unduly limiting the scope of the present invention. In the drawings:
Fig. 1 shows a schematic diagram of a system for managing electrically regulated antennae according to an embodiment of the present invention;
Fig. 2 shows a flow chart of a method for managing electrically regulated antennae according to the managing system of the present invention; and
Fig. 3 shows a flow chart of scanning according to an optional embodiment of the present invention.

### Detailed Description of the Embodiments

The present invention is described hereinafter in detail with reference to the drawings in combination with the embodiments. It needs to be noted that the embodiments of the present application and the features of the embodiments can be combined with each other if there is no conflict.

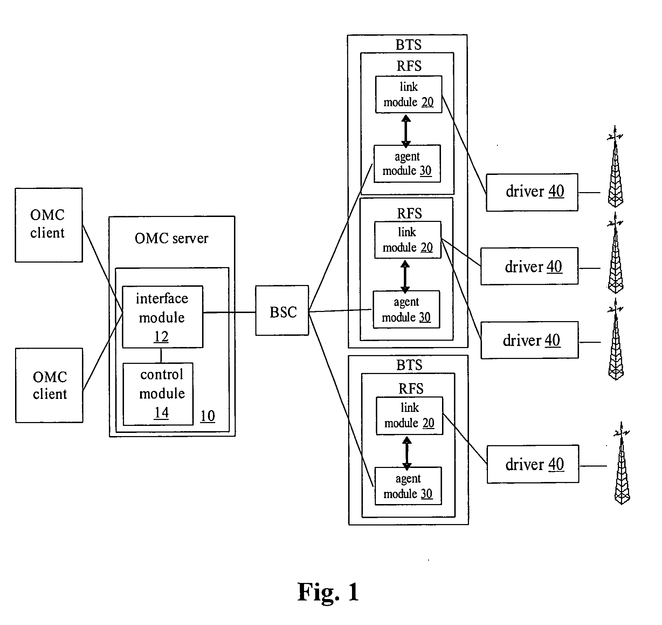

Fig. 1 shows a schematic diagram of an operation maintenance system for managing electrically regulated antennae according to an embodiment of the present invention, which system comprises:
an OMC server, comprising: an interface module 12, adapted for receiving an operation instruction from an input device and/or a report from a driver, and for sending a control command; and a control module 14, adapted for issuing the control command according to the operation instruction and/or the report;
a RFS, connected to the OMC server and comprising: an agent module 30, adapted for forwarding the control command to the driver and forwarding the report to the control module; and a link module 20, adapted for establishing an active link between the driver and the agent module; and
a driver 40, connected to the RFS and adapted for executing the control command to the electrically regulated antenna and reporting an operation result and/or a failure reason code of the execution of the control command.

The operation maintenance system for electrically regulated antennae in this embodiment integrates the system for managing electrically regulated antennae into the OMC server, which improves and supplements the current TMN (telecommunication management network) frame. The original TMN management function is divided into five categories according to the application range: performance management, failure management, configuration management, account management and security management. In the above embodiments, the management and maintenance for electrically regulated antennae are brought into the management frame of TMN as new management content.

Since the operation maintenance system for electrically regulated antenna of this embodiment sets the controller in the OMC server, maintenance personnel can utilize the controller to manage a remote electrically regulated antenna by logging into the OMC server. It solves the problem of relatively low operation efficiency and rather high costs due to the necessity for the maintenance personnel to manage the electrically regulated antenna on site in the related art, thus achieving the effects of allowing the maintenance personnel to manage electrically regulated antenna remotely, improving work efficiency and reducing costs.

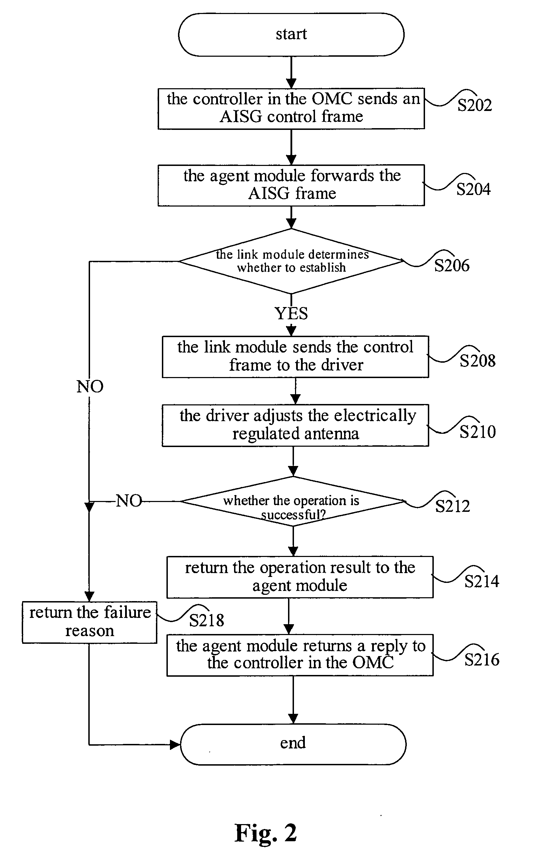

Fig. 2 shows a flow chart of a method for managing electrically regulated antennae according to a preferred embodiment of the present invention. In this case, the maintenance personnel uses an OMC client to send a command (such as down tilt adjustment, antenna calibration, soft reset, etc.) defined by the AISG protocol to a designated electrically regulated antenna. And the OMC server carries out the resolution of client control messages, records the current task, starts a task time-out timer, performs task management to the tasks, and converts the client command into a standard command structure of the AISG protocol before sending the AISG protocol standard command to the agent module according to the RFS address and antenna address in the message. The particular process of these operations is as follows.

Step S202: the controller in the OMC server sends an ASIG control frame as a control command. For example, the OMC client constructs a customized adjustment message (i.e. an operation instruction) after having received an adjustment command from a user. The adjustment message includes the destination antenna driver address, destination RFS address, task ID of the adjustment task, customized command structure (including adjustment command number, command parameters, etc.). The construction rule for the task ID of the adjustment tasks is that shift the client Session ID 8 bits to the left and add 8 bits client task number, with the definition for the same client task number being constructed in an accumulative way beginning from 0 so as to ensure the definition of a task number is unique at the server side. After received the customized adjustment command from the client, the OMC server adds the task into a task pool at the server side, converts the customized adjustment command into a standard AISG command, sends it to the agent module, starts the task time-out timer, and waits for the device to respond.
Step 204: the agent module forwards this ASIG control frame.
Step 208: the link module determines whether to establish an active link, and performs Step S318 if it determines that the link cannot be established and returns the failure reason to the OMC server; and performs the following steps if it determines that the active link can be established.
Step S210: the link module sends the control frame to the driver.
Step S212: after having received the AISG protocol standard command, the antenna driver carries out corresponding actions to adjust the electrically regulated antenna.
Step S214: the driver determines whether the operation is successful, and performs Step S318 if it fails and returns the failure reason to the OMC server; and performs the following steps if it succeeds.
Step S216: return the execution result to the agent module.
Step S218: the agent module returns a reply to the controller in the OMC server.

Subsequently, the corresponding tasks in the task pool can be cleaned at the OMC server according to the task ID. The antenna data after adjustment can be recorded, and the result is sent to the client to be displayed. Of course the failure reason can also be shown to the maintenance personnel.

This embodiment describes the present invention in detail by taking the AISG device management module in the CDMA wireless communication system as an example, which is not intended to limit the present invention.

The AISG device management module is a module specifically for the operation and maintenance of AISG devices (referring to all the devices in accordance with the ASIG protocol, which may be a single antenna, multi-antenna or tower mounted amplifier) in the CDMA wireless network management. This module manages the functions of electrically regulated antenna devices through the OMC server, thus achieving the object of centralized management of antennae.

This embodiment can be practically applied in the CDMA2000 system, and this solution facilitates the maintenance personnel to achieve the centralized management of electrically regulated antennae, significantly reduces the complicated operations in previous antenna adjustment. At the same time, it reduces the operation and maintenance costs of electrically regulated antennae. The method is simple, stable, reliable and easy to implement and has widely practical value. It needs to be noted that the method provided by the present invention is not only limited to the CDMA base station subsystem but also suitable for all mobile communication systems.

Optionally, the control command issued by the control module 14 and the report of the driver 40 comply with the AISG protocol. The AISG protocol is a protocol used for controlling electrically regulated antennae, and it is quite easy to manage electrically regulated antennae (such as down tilt adjustment, antenna calibration, soft reset, etc.) by following this protocol. Of course, a user can also use a customized protocol or a particular manufacturer protocol to manage the electrically regulated antennae if the electrically regulated antennae support it. The present invention is not limited to this optional embodiment.

Optionally, the control module 14 issues the control command by converting the format of the operation instruction into a format complying with the AISG protocol.

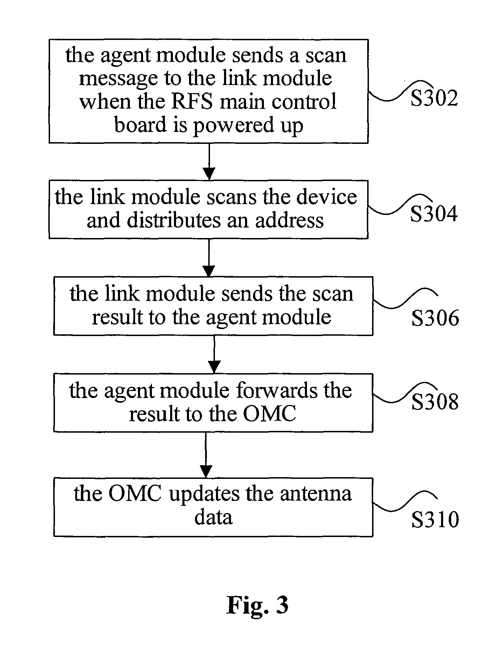

Optionally, in the above operation maintenance system, it further comprises: a agent module 30, adapted for initiating a scan request towards a link module 20 when the RFS is powered up; and the link module 20, adapted for scanning the electrically regulated antennae to determine a currently operable electrically regulated antenna. For example, when the RFS main control board is powered up, the agent module initiates an operation to the link module to scan a currently connected antenna. The link module scans all the connected antennae, distributes addresses, maintains the links unobstructed, and feeds back the information about the scanned antennae through the RFS agent to the OMC server, and the OMC server records the currently scanned antennae. Fig. 3 shows a flow chart of scanning according to this optional embodiment of the present invention, which includes the following steps.
Step S302: when the RFS main control board is powered up, the agent module initiates an operation to the link module to scan a currently connected antenna.
Step S304: the link module scans all the connected antennae and distributes addresses.
Step S306: the link module maintains the links unobstructed and sends the information about the scanned antennae to the agent module.
Step S308: the agent module forwards the scan result to the OMC server (i.e. the controller).
Step S310: the OMC server records the currently scanned antennae.

This optional embodiment can manage the electrically regulated antennae in a more optimized way. For example, the maintenance personnel can actively initiate an inquiry or a scan request through an OMC client to require the link module to obtain a currently operable electrically regulated antenna.

The maintenance personnel can also manually initiate an inquiry or a scan message by using the OMC client. The OMC client directly sends the scan and inquiry message to the agent module. And in this case the agent module only carries out the job of forwarding the message to the link module, while the other procedures are similar to the automatic scan procedure.

Optionally, in the above operation maintenance system, different tasks are identified by way of client ID + client task ID. The link module or control module is adapted for filtering the tasks according to client ID + client task ID so as to ensure that the operation instruction issues only one task to the same driver at the same time. This embodiment uses the manner of client ID + client task ID to identify different tasks and solve the task management for multi-client operations. Since one AISG device can only execute one AISG instruction at the same time, the link module or the OMC server further needs to filter the tasks. This ensures the uniqueness of the task for the AISG driver at the same moment and can solve the controller management problem of electrically regulated antennae during multi-client operation task.

Optionally, the OMC server is an OMM server, the input device is a client for managing the OMM server, and the electrically regulated antenna belongs to a BTS managed by the OMM server. Or, the OMC server is a NMC server, the input device is a client of the NMC server, and the electrically regulated antenna belongs to a BTS of the whole network managed by the NMC server. For example, the particular implementation of scanning, inquiring and antenna adjustment functions can be combined with the configuration control module in the OMC server frame. Before scanning, inquiring or adjustment, the maintenance personnel can inquire all currently configured BTSs and RFSs. And when a user actively initiates a scanning/inquiring/adjustment command, the maintenance personnel is allowed to scan a plurality of RFSs under the same BSC at one time, which achieves the object of scanning/inquiring/adjustment in the whole network.

As shown in Fig. 1, the embodiment of the present invention further provides a controller 10 for managing electrically regulated antennae, and the controller 10 is set in the OMC server and comprises:
an interface module 12, adapted for receiving an operation instruction from an input device and/or a report from a driver and for sending a control command; and
a control module 14, adapted for issuing the control command according to the operation instruction and/or the report;
wherein the driver 40 is set in the electrically regulated antenna and is adapted for executing the control command to the electrically regulated antenna and reporting an operation result and/or a failure reason code of the execution of the control command.

The controller for electrically regulated antennae of this embodiment is set in the OMC server, therefore maintenance personnel can utilize the controller to manage a remote electrically regulated antenna by logging into the OMC server. It solves the problem of relatively low operation efficiency and rather high costs due to the necessity for the maintenance personnel to manage the electrically regulated antenna on site in the related art, thus achieving the effect of allowing the maintenance personnel to manage electrically regulated antenna remotely, improving work efficiency and reducing costs. The controller 10 consists of the interface module 12 and the control module 14.

Optionally, in the above controller, the control command issued by the controller and the report of the driver comply with the AISG protocol. The AISG protocol is a protocol used for controlling electrically regulated antennae and it is quite easy to manage electrically regulated antennae (such as down tilt adjustment, antenna calibration, soft reset, etc.) by following this protocol. Of course, a user can use a customized protocol or a particular manufacturer protocol to manage the electrically regulated antennae if the electrically regulated antennae support it. The present invention is not limited to this optional embodiment.

Optionally, in the above controller, the controller issues the control command by converting the format of the operation instructions into a format complying with the AISG protocol.

As shown in Fig. 1, the embodiments of the present invention further provide an RFS for managing electrically regulated antennae, which comprises:
an agent module 30, adapted for forwarding a control command to a driver and forwarding a report to a controller 10; and
a link module 20, adapted for establishing an active link between the driver and the agent module;
wherein the driver is set in an electrically regulated antenna and is adapted for executing a control command to the electrically regulated antenna and reporting the operation result and/or a failure reason code of the execution of the control command; and the controller 10 is set in the OMC server and is adapted for receiving an operation instruction from an input device and/or a report from a driver and issuing a control command according to the operation instruction and/or the report.

Since the controller is set in the OMC server, maintenance personnel can utilize the controller to manage a remote electrically regulated antenna by logging into the OMC server. It solves the problem of relatively low operation efficiency and rather high costs due to the necessity for the maintenance personnel to manage the electrically regulated antenna on site in the related art, thus achieving the effect of allowing the maintenance personnel to manage electrically regulated antenna remotely, improving work efficiency and reducing costs.

Optionally, in the above RFS, the agent module 30 is further adapted for initiating a scan request towards the link module 30 when the RFS is powered up; and the link module 20 is further adapted for scanning the electrically regulated antennae to determine a currently operable electrically regulated antenna. For example, when the RFS main control board is powered up, the agent module initiates an operation to the link module to scan a currently connected antenna. The link module scans all the connected antennae, distributes addresses, maintains the links unobstructed, and feeds back the information about the scanned antennae through the RFS agent to the OMC server, and the OMC server records the currently scanned antennae. This optional embodiment can manage the electrically regulated antennae in a more optimized way. For example, the maintenance personnel can actively initiate an inquiry or a scan request through an OMC client to require the link module to obtain a currently operable electrically regulated antenna.

The maintenance personnel can also manually initiate an inquiry or a scan message by using the OMC client, and the OMC client directly sends the scan and inquiry messages to the agent module. The agent module only carries out the job of forwarding the message to the link module at this moment, while the other procedures are similar to the automatic scan procedure.

The above embodiments of the present invention directly integrate the electrically regulated antenna controller into the mobile communication network management system and directly interact with the electrically regulated antenna through the AISG protocol, which achieve the object of managing the antennae. Instead of going to the site, the maintenance personnel only needs to log into any client of the OMC connected to the BSC to finish the management and adjustment of electrically regulated antennae, thus achieving the centralized management and maintenance of electrically regulated antenna devices under one or more BSCs with low costs.

Apparently, those skilled in the art should understand that the modules and steps of the present invention mentioned above can be implemented with general computing devices which can be centralized on a single computing device or distributed on the network comprising multiple computing devices. Optionally they can be implemented with program codes executable by the computing device(s). Therefore they can be stored in a storage device and executed by the computing device(s), and in certain cases they can be implemented by processing the shown or described steps here in different sequence, by producing them as integrated circuit modules, or by producing some modules or steps of them as a single integrated circuit module. In this way, the present invention is not restricted to any particular hardware and software combination.

Above description is only to illustrate the preferred embodiments but not to limit the present invention. Various alternations and changes to the present invention are apparent to those skilled in the art. Any amendments, equivalent substitutions, improvements and etc. within the spirit and principle of the present invention are all concluded in the scope of the present invention.

## Claims

1. An operation maintenance system for managing an electrically regulated antenna, **characterized by** comprising:
a driver, adapted for executing a control command to the electrically regulated antenna and reporting an operation result and/or a failure reason code of the execution of the control command;
an operation maintenance center server, comprising:
an interface module, adapted for receiving an operation instruction from an input device and/or a report from a driver and for sending the control command; and
a control module, adapted for issuing the control command according to the operation instruction and/or the report; and
a radio frequency subsystem, comprising:
an agent module, adapted for forwarding the control command to the driver and forwarding the report to the control module; and
a link module, adapted for establishing an active link between the driver and the agent module.

2. The operation maintenance system according to claim 1, **characterized in that** the control command issued by the control module and the report of the driver comply with the antenna interface standard group protocol.

3. The operation maintenance system according to claim 2, **characterized in that** the control module issues the control command by converting the format of the operation instruction into a format complying with the antenna interface standard group protocol.

4. The operation maintenance system according to claim 3, **characterized in that** it further comprises:
the agent module being further adapted for initiating a scan request towards the link module when the radio frequency subsystem is powered up; and
the link module being further adapted for scanning the electrically regulated antenna to determine a currently operable electrically regulated antenna.

5. The operation maintenance system according to claim 1, **characterized in that** it uses the manner of client ID + client task ID to identify different tasks, in which the link module or the control module is adapted for filtering the tasks according to client ID + client task ID so as to ensure that the operation instruction issues only one task to the same driver at the same time.

6. The operation maintenance system according to claim 1, **characterized in that**,
the operation maintenance center server is a management operation maintenance module server, the input device is a client of the management operation maintenance module server, and the electrically regulated antenna belongs to a base transceiver station managed by the management operation maintenance module server; or
the operation maintenance center server is a network management center server, the input device is a client of the network management center server, and the electrically regulated antenna belongs to a base transceiver station of the whole network managed by the network management center server.

7. A controller for managing an electrically regulated antenna, **characterized in that** the controller is set in an operation maintenance center server and comprises:
an interface module, adapted for receiving an operation instruction from an input device and/or a report from a driver and for sending a control command for managing the electrically regulated antenna to the driver; and
a control module, adapted for issuing the control command according to the operation instruction and/or the report;
wherein the driver is set in the electrically regulated antenna, and is adapted for executing the control command to the electrically regulated antenna and reporting an operation result and/or a failure reason code of the execution of the control command.

8. The controller according to claim 7, **characterized in that** the control command issued by the controller and the report of the driver comply with the antenna interface standard group protocol.

9. The controller according to claim 8, **characterized in that** the control module issues the control command by converting the format of the operation instruction into a format complying with the antenna interface standard group protocol.

10. A radio frequency subsystem for managing an electrically regulated antenna, **characterized by** comprising:
an agent module, adapted for forwarding a control command to a driver and forwarding a report to a controller; and
a link module, adapted for establishing an active link between the driver and the agent module;
wherein the driver is set in the electrically regulated antenna, and is adapted for executing the control command to the electrically regulated antenna and reporting an operation result and/or a failure reason code of the execution of the control command; and the controller is set in an operation maintenance center server, and is adapted for receiving an operation instruction from an input device and/or the report from the driver and issuing the control command according to the operation instruction and/or the report.

11. The radio frequency subsystem according to claim 10, **characterized in that**,
the agent module is further adapted for initiating a scan request towards the link module when the radio frequency subsystem is powered up or a message of the input device is received; and
the link module is further adapted for scanning the electrically regulated antenna to determine a currently operable electrically regulated antenna and for feeding back the currently operable electrically regulated antenna to the operation maintenance center server.
